(19) Europäisches Patentamt
European Patent Office
Office européen des brevets

(11) **EP 0 817 120 A2**

(12) **EUROPÄISCHE PATENTANMELDUNG**

(43) Veröffentlichungstag:
07.01.1998 Patentblatt 1998/02

(51) Int. Cl.$^6$: **G06T 5/40**

(21) Anmeldenummer: 97303980.3

(22) Anmeldetag: 09.06.1997

(84) Benannte Vertragsstaaten:
AT BE CH DE DK ES FI FR GB GR IE IT LI LU MC NL PT SE

(30) Priorität: 27.06.1996 KR 9624413

(71) Anmelder:
Samsung Electronics Co., Ltd.
Suwon-city, Kyungki-do (KR)

(72) Erfinder: **Park, Se-woong**
Seoul (KR)

(74) Vertreter: **Chugg, David John**
**Appleyard Lees,**
**15 Clare Road**
**Halifax, West Yorkshire HX1 2HY (GB)**

(54) **Schaltung und Verfahren zum Bildhistogrammausgleich**

(57) A histogram equalization circuit including a calculator (110; 210; 310) for calculating cumulative distribution function (CDF) values for the respective gray levels with respect to an input image corresponding to an area signal of a predetermined period and a mapper (130; 220; 330) for mapping the input image of a predetermined period to a new gray level based on the CDF values of the respective gray levels. The present invention obtains a CDF value by selecting a field period or a frame period as a CDF calculation area and performs a histogram equalization the image signal of the field period or the frame period based on the CDF value. Therefore, it is possible to obtain a high correlation between the input data and the equalized data and to reduce the quantity of hardware.

FIG. 2

## Description

The present invention relates to a histogram equalization circuit based on a cumulative distribution function (CDF) calculation area and a method therefor, and more particularly, to a circuit for obtaining a CDF value by selecting a predetermined section of an image as the CDF calculation area and histogram equalizing an image signal of a predetermined period based on the CDF value and a method therefor.

The basic operation of histogram equalization is to convert a given input image based on the histogram of the input image. The histogram is a gray level distribution of the given input image. The histogram provides an entire description of the appearance of the image. A gray level which is appropriately controlled with respect to the given image improves the appearance of the image or a contrast thereof.

Histogram equalization is a method for enhancing the contrast of the given image according to the sample distribution of the image and is the most widely known among the various methods for enhancing the contrast, such as those described in the following documents: [1] J.S.Lim, "Two-Dimensional Signal and Image Processing," Prentice Hall, Englewood Cliffs, New Jersey, 1990; and [2] R.C.Gonzalez and P.Wints, "Digital Image Processing," Addison-Wesley, Reading, Massachusetts, 1977.

Useful applications of the histogram equalization method, including medical image processing and radar image processing, are described in the following documents: [3] J.Zimmerman, S.Pizer, E.Staab, E.Perry, W.McCartney, and B.Brenton, "Evaluation of the Effectiveness of Adaptive Histogram Equalization For Contrast Enhancement," IEEE Transaction on Medical Imaging, pp.304-312, Dec. 1988; and [4] Y.Li, W.Wang, and D.Y.Yu, "Application of Adaptive Histogram Equalization to X-Ray Chest Image," Proceedings. of the SPIE, pp.513-514, vol.2321, sp 1994.

Generally, histogram equalization flattens the gray level distribution of the image, thus enhancing the contrast of the image by enlarging a dynamic range.

Hereinafter, a typical histogram equalization method is simply described.

A given image {X} is described by L discrete gray levels {$X_0$, $X_1$, ..., $X_{L-1}$}, where, $X_0$ and $X_{L-1}$ denote a black level and a white level, respectively.

A probability density function (PDF) is defined as:

$$p(X_k) = \frac{n_k}{n} \text{ , for k = 0, 1, ..., L-1} \qquad (1)$$

Here, $n_k$ denotes the number of times of a gray level $X_k$ appears in image {X} and n denotes the total number of samples in image {X}. At this time, the CDF is defined as follows.

$$c(X_k) = \sum_{j=0}^{k} p(X_j) \qquad (2)$$

An output Y of the typical histogram equalization with respect to the input sample $X_k$ of the given image based on the CDF value is expressed as follows:

$$Y = c(X_k)X_{L-1} \qquad (3)$$

Therefore, by mapping the levels of the input image to new gray levels based on the CDF, picture quality is improved by enhancing the contrast of the entire screen.

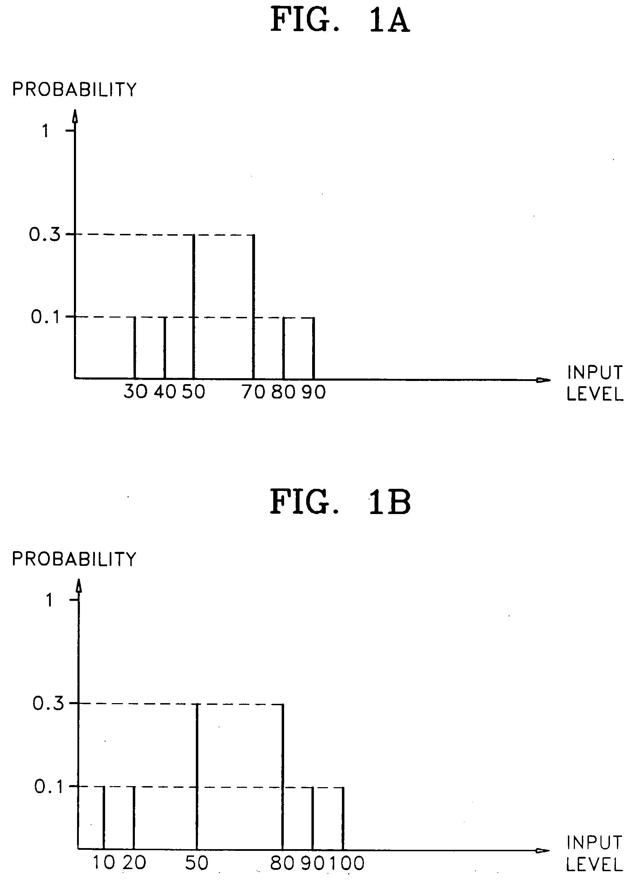

Figure 1A shows an example of the PDF of a specific image. The PDF is the result in which the number of pixels of the respective gray levels is counted, receiving a luminance signal whose brightness is between the minimum gray level "0" and the maximum gray level MAX "100" and the number is divided by the number of the entire pixels. The input image shown in Figure 1A is concentrated between a gray level "30" and a gray level "90".

The CDF is obtained using Formula (2) based on the PDF shown in Figure 1A. The output after performing the histogram equalization using the CDF as a conversion function is expressed by the Formula (3). The PDF of the equalized image is shown in Figure 1B. Therefore, when the input image, concentrated over the range "30-90" shown in Figure 1A, is histogram equalized, it is mapped to the gray level "10-100", as shown in Figure 1B. Thus, the contrast is enhanced and a clear picture is provided.

The quantity of hardware is closely related to how the CDF calculation area is set to obtain the CDF value based on the PDF. Namely, when the CDF value is obtained by summing over many input pixels, the correlation between the input and output images is improved, but the quantity of hardware required increases. Therefore, it is necessary to set up an appropriate CDF calculation area so as to heighten the correlation between the input data and the equalized data and to simplify the hardware.

It is an aim of embodiments of the present invention to provide a circuit for obtaining a CDF by selecting a predetermined section of an image as a CDF calculation area and histogram- equalizing an image signal of a predetermined period based on the CDF value.

It is another aim of embodiments of the present invention to provide a method for obtaining a CDF by selecting a predetermined section of an image as a CDF calculation section and histogram equalizing an image signal of a predetermined period based on the CDF.

According to a first aspect of the present invention, there is provided a histogram equalization circuit in which contrast is enhanced by controlling a gray level with respect to an image signal expressed by a level of a predetermined number, comprising calculation means for calculating cumulative distribution function (CDF) values for the respective gray levels with respect to an input image corresponding to an area signal of a predetermined period by counting the number of pixels which are not more than the respective gray levels and dividing the counted result by the total number of samples with respect to the input image and mapping means for mapping the input image of a predetermined period to a new gray level based on the CDF values of the respective gray levels.

Preferably, there is further provided a frame memory for delaying said input image by one frame in order to input the image signal in the same frame as that of the CDF value generated in said calculation means to said mapping means. Alternatively, there may be a field memory for delaying said input image by one field.

Said calculation means preferably comprises: a plurality of comparators for comparing the level of the input image with the respective gray levels; a plurality of accumulators for accumulating the respective outputs of said plurality of comparators according to said area signal and outputting the number of pixels which are not more than the respective gray levels; and a plurality of dividers for dividing the respective outputs of said plurality of accumulators by the total number of samples with respect to said input image of the predetermined period and outputting the CDF values of the respective gray levels.

Preferably, said area signal of the predetermined period is the CDF calculation area of a frame period.

Said input image of the predetermined period is preferably the frame image.

Said area signal of the predetermined period may be the CDF calculation area of a field period.

Said input image of the predetermined period may be the frame image or the field image.

According to a second aspect of the invention, there is provided a histogram equalization method for enhancing contrast by controlling a gray level with respect to an image signal expressed by a level of a predetermined number, comprising the steps of (a) calculating cumulative distribution function (CDF) values for the respective gray levels by counting the number of pixels which are not more than the respective gray levels and dividing the counted result by the total number of samples with respect to the input image corresponding to an area signal of a predetermined period and (b) mapping the input image of a predetermined period to a new gray level based on the CDF values of the respective gray levels.

Said first area signal may represent the CDF calculation area of the odd field period and said second area signal represent the CDF calculation area of the even field period.

Said calculation means may output the CDF value obtained by adding the CDF value of the (m-1)th field to the CDF value of the mth field, said mapping means map the image signal of said mth field to a new level based on said added CDF value, and m may be a predetermined number.

According to a third aspect, there is provided histogram equalization method for enhancing contrast by controlling a gray level with respect to an image signal expressed by a level of a predetermined number, comprising the steps of: (a) calculating cumulative distribution function (CDF) values for the respective gray levels by counting the number of pixels which are not more than the respective gray levels and dividing the counted result by the total number of samples with respect to the input image corresponding to an area signal of a predetermined period; and (b) mapping the input image of a predetermined period to a new gray level based on the CDF values of the respective gray levels.

Said area signal of the predetermined period may be the CDF calculation area of a frame period.

Said input image of the predetermined period may be the frame image.

Said area signal of the predetermined period may be the CDF calculation area of a field period.

Said input image of the predetermined period may be the field image or the frame image.

Preferably, in said step (a), the CDF value obtained by adding the CDF value of the (m-1)th field to the CDF value of the mth field is output and m is a predetermined number.

In said step (b), the image signal of said mth field may be mapped to a new level based on the added CDF value.

For a better understanding of the invention, and to show how embodiments of the same may be carried into effect, reference will now be made, by way of example, to the accompanying diagrammatic drawings, in which:

Figure 1A shows an example of a PDF of a specific image;

Figure 1B shows a PDF of an image after performing a histogram equalization based on the PDF shown in Figure 1A;

Figure 2 is a block diagram of an embodiment of a histogram equalization circuit according to the present invention;

Figure 3 is a block diagram of another embodiment of a histogram equalization circuit according to the present invention;

Figure 4 is a block diagram of still another embodiment of a histogram equalization circuit according to the present invention;

Figure 5 is a detailed circuit diagram of an embodiment of a CDF calculator used in the circuits shown in Figures 2 and 3;

Figure 6 is a detailed circuit diagram of another embodiment of a CDF calculator used in the circuits shown in Figures 2 and 4;

Figure 7 is a detailed circuit diagram of still another embodiment of a CDF calculator used in the circuit shown in Figure 4; and

Figures 8A and 8J are timing diagrams showing area signals used in examples of the present invention and a histogram equalization period.

Hereinafter, the preferred embodiments of a histogram equalization circuit based on a CDF calculation area according to the present invention and a method therefor will be described with reference to the attached drawings.

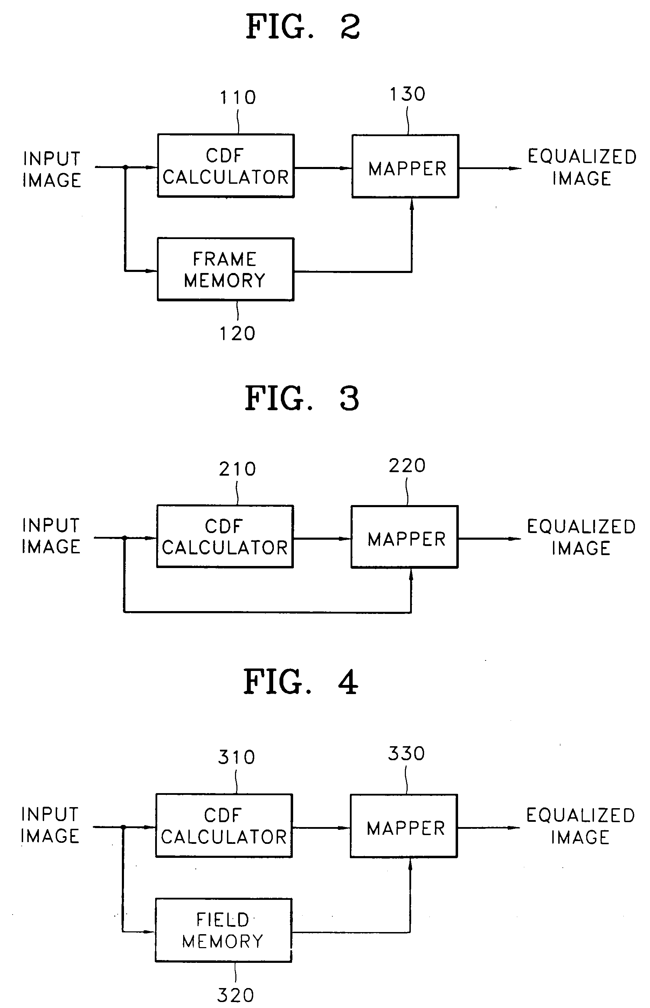

In Figure 2, a CDF calculator 110 directly calculates on a CDF value in an input image of a predetermined bit width (for example, 8 bits). Namely, the CDF values of the respective gray levels are obtained by dividing the respective cases in which the gray level=0, the gray level≤, ..., the gray level≤254, and the gray level≤255 by the total number of samples. In embodiments of the present invention it is possible to omit the PDF calculator since the CDF is directly calculated from the input pixel.

A frame memory 120 delays the input image by one frame. Here, the input image is delayed by one frame by the frame memory 120 in order to perform the histogram equalization to the frame data itself whose statistical characteristics (CDF value) is obtained in the CDF calculator 110.

A mapper 130 maps the level of the input image to the new gray level according to the CDF value calculated in the CDF calculator 110 corresponding to the level of the input image output through the frame memory 120. Here, the mapper 130 updates the CDF value calculated by the CDF calculator 110 in units of a frame and constructs a look-up-table for reading out the CDF value corresponding to the level of the input image.

Figure 3 is a block diagram of another embodiment of a histogram equalization circuit according to the present invention, in which the frame memory 120 is omitted. In cases where the correlation between the previous frame and the present frame is more than 0.95(95%), the frame memory 120 shown in Figure 2, which constitutes a large amount of hardware is not used. The CDF obtained from the previous frame is applied to the present frame in Figure 3.

Figure 4 is a block diagram of still another embodiment of a histogram equalization circuit according to the present invention, which is different from the construction of Figure 2 in that a field memory 320 is used instead of a frame memory 120.

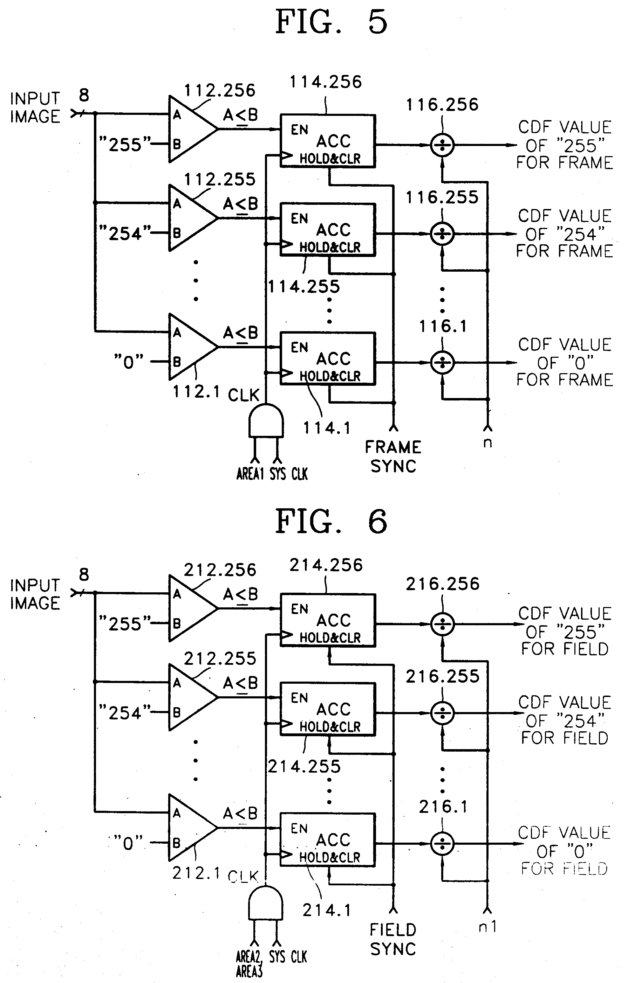

Figure 5 is a detailed circuit diagram of an embodiment of the CDF calculator 110 which can be used in the circuits shown in Figures 2 and 3. Comparators 112.1 to 112.256 compare the level of the input image with the gray levels from "0" to "255". For example, the outputs of the comparators 112.1 to 112.255 become logic "1" when a pixel with gray level less than "255" is input, the outputs of the comparators 112.1 to 112.128 become logic "1" when a pixel with gray level less than "127" is input, and the output of the comparator 112.1 becomes logic "1" when the pixel with gray level of "0" is input.

In case the output of the comparators 112.1 to 112.256 input to the enable port EN according to the clock signal CLK is "1", the accumulators (ACC) 114.1 to 114.256 increase their accumulated values by one. The accumulated value is output and the accumulated value is cleared to "0" when a frame synchronizing signal FRAME SYNC is input to the hold and clear ports (HOLD & CLR) of the ACCs. For example, the signal output from the accumulator 114.256 is the number of pixels in a frame with gray levels not more than "255", the signal output from the accumulator 114.128 is the number of pixels in a frame with gray levels not more than "127", and the signal output from the accumulator 114.1 is the number of pixels in a frame having the level "0". When the dividers 116.1 to 116.256 divide the outputs of the accumulators 114.1 to 114.256 by the total number of samples per frame "n", the CDF values of gray levels from "0" to "255" are output.

A clock signal CLK input to the accumulators 114.1 to 114.256 is the output of AND gate G1 obtained by performing an AND operation of the system clock signal SYS CLK and the area signal AREA1, which is active during the frame period representing the CDF calculation area. Namely, only when the first area signal AREA1 is "high", the outputs of the comparators 112.1 to 112.256 are accumulated in the accumulators 114.1 to 114.256.

Here, the respective accumulators 114.1 to 114.256 include a counter for counting the outputs of their respective comparators 112.1 to 112.256 only when they become logic "1" according to the clock signal CLK obtained by performing an AND operation with respect to the first area signal AREA1 and the system clock signal SYS CLK and clearing them according to the frame synchronizing signal FRAME SYNC and a latch for inputting the frame synchronizing signal FRAME SYNC as a hold signal, latching the output of the counter, and outputting the latched output to the respective accumulators 116.1 to 116.256 according to the frame synchronizing signal FRAME SYNC. Here, the complexity of hardware as large as the number of samples is increased by the counter operated according to the histogram equalization period of the area signal showing the CDF calculation period.

Figure 6 is a detailed circuit diagram of another embodiment of the CDF calculator which can be used in the histogram equalization circuit shown in Figures 2 to 4.

When the CDF calculator shown in Figure 6 is used in the histogram equalization circuit shown in Figures 2 and 3, a second area signal AREA2 having only one of two fields constituting one frame as the CDF calculation area is used. The outputs of the comparators 212.1 to 212.256 accumulated according to the field synchronizing signal FIELD SYNC are output to the respective dividers 216.1 to 216.256 in the respective accumulators 214.1 to 214.256. The CDF values whose gray levels per a field are from "0" to "255" are obtained by dividing the outputs of the respective accumulators 214.1 to 214.256 by "n1", the total number of samples per field in the respective dividers 216.1 to 216.256.

When the CDF calculator shown in Figure 6 is used in the histogram equalization circuit shown in Figure 4, a third area signal AREA3 equating every field period to the CDF calculation area is used. The outputs of the respective comparators 212.1 to 212.256 accumulated according to the field synchronizing signal FIELD SYNC are output to the respective dividers 216.1 to 216.256 in the respective accumulators 214.1 to 214.256. The CDF values whose gray levels per a field are from "0" to "255" are obtained by dividing the outputs of the respective accumulators 214.1 to 214.256 by the number "n1" of the entire samples in the respective dividers 216.1 to 216.256.

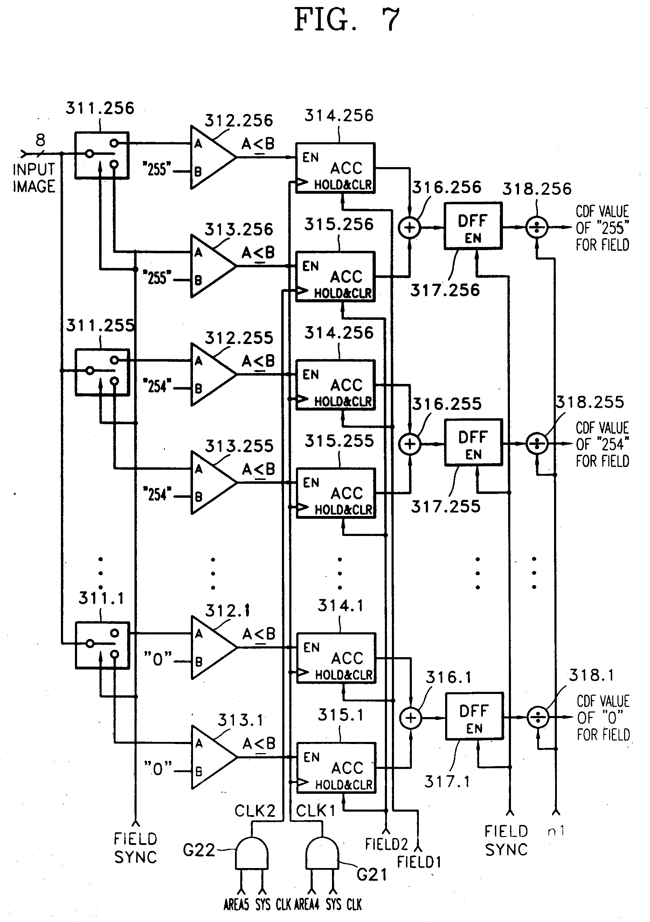

Figure 7 is a detailed circuit diagram of still another embodiment of the CDF calculator which can be used in the histogram equalization circuit shown in Figure 4.

In Figure 7, the respective switches 311.1 to 311.256 select the input image of the first field (which is referred to as "an odd field" hereinafter) of two fields constituting one frame based on the field synchronizing signal FIELD SYNC and input it to the first input ports "A" of the comparators 312.1 to 312.256. They also select the input image of the second field (which is referred to as "an even field" hereinafter) and input it to the first input ports "A" of the comparators 313.1 to 313.256. Here, the respective switches can be constructed by a demultiplexer.

The respective comparators 312.1 to 312.256 and the respective comparators 313.1 to 313.256 compare the level of the input image switched by the switches with the respective gray levels.

The accumulators 314.1 to 314.256 increase the outputs of the respective comparators 312.1 to 312.256 input to an enable port EN according to a clock signal CLK1 by one when they are logic "1", output the accumulated value when a control signal FIELD1 representing the odd field is input to the hold and clear port HOLD&CLR, and clear the accumulated value to "0". Also, the respective accumulators 315.1 to 315.256 increase the outputs of the respective comparators 313.1 to 313.256 input to the enable port EN according to a clock signal CLK2 by one when they are logic "1", output the accumulated value when a control signal FIELD 2 representing the even field is input to the hold and clear port HOLD&CLR, and clear the accumulated value to "0".

The adders 316.1 to 316.256 add the outputs of the accumulators 314.1 to 314.256 to the outputs of the accumulators 315.1 to 315.256 and output them to D flip-flops (DFF) 317.1 to 317.256. The outputs of the D flip-flops are output to the dividers 318.1 to 318.256 based on the field synchronizing signal FIELD SYNC. The dividers divide the outputs of the D flip-flops by "n1" the total number of samples per field and output the CDF values of the respective gray levels for the field.

The clock signal CLK1 input to the respective accumulators 314.1 to 314.256 is obtained by performing an AND operation with respect to the system clock SYS CLK and a fourth area signal AREA4 showing the CDF calculation area of the odd field period in an AND gate G21. The clock signal CLK2 input to the respective accumulators 315.1 to 315.256 is obtained by performing an AND operation with respect to the system clock SYS CLK and a fifth area signal AREA5 showing the CDF calculation area of the even field period in an AND gate G22.

Therefore, the CDF calculator shown in Figure 7 is used in mapping the image signal of the mth field to a new level based on the CDF value obtained by adding the CDF value of the (m-1)th field to the CDF value of mth field.

Selecting the range of the CDF calculation area so as to create a high correlation between the input data and the mapped data and to simplify the hardware is the most important aspect of the present invention.

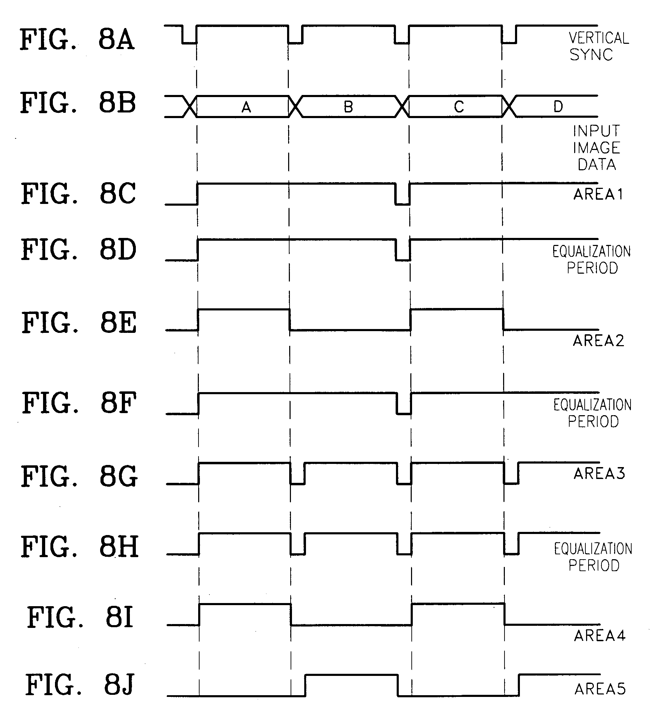

Figures 8A to 8J are timing diagrams showing the signals used in the present invention and a histogram equalization period.

Figure 8A shows a vertical synchronizing signal. Figure 8B shows input image data which is synchronized by the vertical synchronizing signal. Figure 8C shows a first area signal AREA1 for using one frame period as the CDF calculation area. Figure 8D shows a histogram equalization period for obtaining the CDF value during one frame using the first area signal AREA 1 shown in Figure 8C and mapping the image signal of one frame to a new gray level based on the obtained CDF value.

Here, the first area signal AREA1 is input to the AND gate G1 of the CDF calculator shown in Figure 5, the CDF calculator of Figure 5 maps the image signal of the present frame to a new gray level based on the CDF value of the present frame or maps the image signal of the present frame to a new gray level based on the CDF value of the previous frame by being applied to the histogram equalization circuit shown in Figure 2 or 3.

Figure 8E shows the second area signal AREA2 with the CDF calculation area during one field in one frame. Figure 8F shows a histogram equalization period for obtaining the CDF value during one field according to the second area signal AREA2 shown in Figure 8E and mapping the image signal of one frame to a new gray level based on the obtained CDF value.

The second area signal AREA2 is input to the AND gate G12 of the CDF calculator shown in Figure 6. The CDF calculator of Figure 6 maps the image signal of one frame to a new gray level based on the CDF value during one field or maps the image signal of the present frame to a new gray level based on the CDF value during one field of the previous frame by being applied to the histogram equalization circuit shown in Figure 2 or 3.

Figure 8G shows a third area signal AREA3 having the CDF calculation area during every field. Figure 8H shows a histogram equalization period for obtaining the CDF value of every field according to the third area signal AREA3 shown in Figure 8G and mapping the image signal of every field to a new gray level based on the obtained CDF value.

The third area signal AREA3 is input to the AND gate G12 of the CDF calculator shown in Figure 6. The CDF calculator of Figure 6 maps the image signal of every field to a new gray level based on the CDF value obtained in every field by being applied to the histogram equalization circuit shown in Figure 4.

The inner construction of the counter of the respective accumulators is simplified in the histogram equalization performed by calculating the CDF value in units of a field using the second area signal or the third area signal (AREA2 or AREA3) shown in Figure 8E or 8G compared with the histogram equalization performed by calculating the CDF value in units of a frame using the first area signal (AREA1) shown in Figure 8C. Thus, the quantity of the hardware is reduced.

Figures 8I and 8J show a fourth area signal (AREA4) and a fifth area signal (AREA5), respectively. The fourth area signal and the fifth area signal (AREA4 and AREA5) are respectively input to the AND gates (G21 and G22) of the CDF calculator shown in Figure 7. The CDF calculator of Figure 7 is applied to the histogram equalization circuit shown in Figure 4.

Namely, a field image of a B section is mapped to a new gray level using a result obtained by adding the CDF value of the A section shown in Figure 8B obtained using the fourth area signal (AREA4) shown in Figure 8I to the CDF value of the B section shown in Figure 8B obtained using the fifth area signal AREA5 shown in Figure 8J. A field image of a C section is mapped to a new gray level using a result obtained by adding the CDF value of the B section to that of the C section.

The CDF calculator shown in Figures 5, 6, and 7 is constructed to calculate the respective CDF values of the total gray levels, however, can be constructed to calculate the CDF value of the gray level of a predetermined number which is smaller than the total gray levels in order to simplify hardware. At this time, a CDF interpolator is provided in the rear end of the CDF calculator.

As mentioned above, it is possible to heighten the correlation between the input data and the equalized data and to reduce the quantity of the hardware by histogram equalizing the image signal of the field or the frame period based on the CDF value obtained by selecting the field or the frame period as the CDF calculation area.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A histogram equalization circuit in which contrast is enhanced by controlling a gray level with respect to a image signal expressed by a level of a predetermined number, comprising:

   calculation means (110; 210; 310) for calculating cumulative distribution function (CDF) values for the respective gray levels with respect to an input image corresponding to an area signal of a predetermined period by counting the number of pixels which are not more than the respective gray levels and dividing the counted result by the total number of samples with respect to the input image; and

   mapping means (130; 220; 330) for mapping the input image of a predetermined period to a new gray level based on the CDF values of said respective gray levels.

2. A histogram equalization circuit as claimed in claim 1, further comprising a frame memory (120) for delaying said input image by one frame in order to input the image signal in the same frame as that of the CDF value generated in said calculation means to said mapping means.

3. A histogram equalization circuit as claimed in claim 1, further comprising a field memory (320) for delaying said input image by one field.

4. A histogram equalization circuit as claimed in claim 1 or 3, wherein said calculation means (110; 210; 310) comprises:

a plurality of comparators (112.1-112.256; 212.1-212.56) for comparing the level of the input image with the respective gray levels;

a plurality of accumulators (114.1-114.256; 214.1-214.56) for accumulating the respective outputs of said plurality of comparators according to said area signal and outputting the number of pixels which are not more than the respective gray levels; and

a plurality of dividers (116.1-116.256; 216.1-216.256) for dividing the respective outputs of said plurality of accumulators by the total number of samples with respect to said input image of the predetermined period and outputting the CDF values of the respective gray levels.

5. A histogram equalization circuit as claimed in claim 4, wherein said area signal (AREA 1) of the predetermined period is the CDF calculation area of a frame period.

6. A histogram equalization circuit as claimed in claim 5, wherein said input image of the predetermined period is the frame image.

7. A histogram equalization circuit as claimed in claim 4, wherein said area signal (AREA 2) of the predetermined period is the CDF calculation area of a field period.

8. A histogram equalization circuit as claimed in claim 7, wherein said input image of the predetermined period is the frame image.

9. A histogram equalization circuit as claimed in claim 7, wherien said input image of the predetermined period is the field image.

10. A histogram equalization circuit as claimed in claim 3, wherein said calculation means comprises:

selecting means (311.1-311.256) for selecting one of the input image of an odd field and the input image of an even field according to a field synchronizing signal;

first comparing means (312.1-312.256) comprised of a plurality of comparators for comparing the level of the input image of the odd field selected by said selecting means with the respective gray levels;

second comparing means (313.1-313.256) comprised of a plurality of comparators for comparing the level of the input image of the even field selected by said selecting means with the respective gray levels;

first accumulating means (314.1-314.256) comprised of a plurality of accumulators for accumulating the output of said first comparing means according to a first area signal (AREA4) and outputting the number of pixels not more than the respective gray levels;

second accumulating means (315.1-315.256) comprised of a plurality of accumulators for accumulating the output of said second comparing means according to a second area signal (AREA5) and outputting the number of pixels not more than the respective gray levels;

adding means (316.1-316.256) comprised of a plurality of adders for adding the outputs of the respective accumulators of said first accumulating means to the outputs of the respective accumulators of said second accumulating means, respectively;

latching means (317.1-317.256) comprised of a plurality of latches for latching the respective outputs of said plurality of adders and outputting the latched signal according to said field synchronizing signal; and

dividing means (318.1-318.256) comprised of a plurality of dividers for dividing the respective outputs of said plurality of latches by the total number of samples of the input image of the predetermined period and outputting the CDF values of the respective gray levels.

11. A histogram equalization circuit as claimed in claim 10, wherein said first area signal (AREA4) represents the CDF calculation area of the odd field period and said second area signal (AREA5) represents the CDF calculation area of the even field period.

12. A histogram equalization circuit as claimed in claim 11, wherein said calculation means outputs the CDF value obtained by adding the CDF value of the (m-1)th field to the CDF value of the mth field, said mapping means maps the image signal of said mth field to a new level based on said added CDF value, and m is a predetermined number.

13. A histogram equalization method for enhancing contrast by controlling a gray level with respect to an image signal expressed by a level of a predetermined number, comprising the steps of:

(a) calculating cumulative distribution function (CDF) values for the respective gray levels by counting the number of pixels which are not more than the respective gray levels and dividing the counted result by the total number of samples with respect to the input image corresponding to an area signal of a predetermined period; and

(b) mapping the input image of a predetermined period to a new gray level based on the CDF values of the respective gray levels.

14. A histogram equalization method as claimed in claim 13, wherein said area signal of the predetermined period is the CDF calculation area of a frame period.

15. A histogram equalization method as claimed in claim 14, wherein said input image of the predetermined period is the frame image.

16. A histogram equalization method as claimed in claim 13, wherein said area signal of the predetermined period is the CDF calculation area of a field period.

17. A histogram equalization method as claimed in claim 16, wherein said input image of the predetermined period is the field image.

18. A histogram equalization method as claimed in claim 17, wherein said input image of the predetermined period is the frame image.

19. A histogram equalization method as claimed in claim 16, wherein in said step (a), the CDF value obtained by adding the CDF value of the (m-1)th field to the CDF value of the mth field is output and m is a predetermined number.

20. A histogram equalization method as claimed in claim 19, wherein in said step (b), the image signal of said mth field is mapped to a new level based on the added CDF value.

# FIG. 1A

# FIG. 1B

# FIG. 2

INPUT IMAGE → 110 CDF CALCULATOR → 130 MAPPER → EQUALIZED IMAGE

120 FRAME MEMORY

# FIG. 3

INPUT IMAGE → 210 CDF CALCULATOR → 220 MAPPER → EQUALIZED IMAGE

# FIG. 4

INPUT IMAGE → 310 CDF CALCULATOR → 330 MAPPER → EQUALIZED IMAGE

320 FIELD MEMORY

# FIG. 5

# FIG. 6

# FIG. 7

FIG. 8A — VERTICAL SYNC

FIG. 8B — A B C D — INPUT IMAGE DATA

FIG. 8C — AREA1

FIG. 8D — EQUALIZATION PERIOD

FIG. 8E — AREA2

FIG. 8F — EQUALIZATION PERIOD

FIG. 8G — AREA3

FIG. 8H — EQUALIZATION PERIOD

FIG. 8I — AREA4

FIG. 8J — AREA5